Europäisches Patentamt

European Patent Office

Office européen des brevets

(11) Publication number: **0 379 770**
**A2**

# EUROPEAN PATENT APPLICATION

(21) Application number: 89306721.5

(51) Int. Cl.⁵: **G06F 11/10**

(22) Date of filing: 03.07.89

(30) Priority: 27.01.89 US 303649

(43) Date of publication of application:
01.08.90 Bulletin 90/31

(84) Designated Contracting States:
AT BE CH DE ES FR GB GR IT LI LU NL SE

(71) Applicant: **DIGITAL EQUIPMENT CORPORATION**
**146 Main Street**
**Maynard, MA 01754(US)**

(72) Inventor: **Lynch, John J.**
**46 Bent Avenue**
**Wayland Massachusetts 01778(US)**
Inventor: **Tessari, James E.**
**222 Mystic Valley Parkway**
**Arlington Massachusetts(US)**

(74) Representative: **Goodman, Christopher et al**
**Eric Potter & Clarkson St. Mary's Court St.**
**Mary's Gate**
**Nottingham NG1 1LE(GB)**

(54) Address transfer error detection process.

(57) An address transfer error detection method and apparatus for computer memory transfer including address control signal error indication with parity bit comparison between destination and source generated parity bit and comparison feedback to the source.

EP 0 379 770 A2

# ADDRESS TRANSFER ERROR DETECTION PROCESS

## Field of the Invention

The present invention relates to digital computer memory address selection, and more particularly to a method and apparatus for detecting errors in computer memory address transfers between a computer memory address controller and associated memory address receivers.

## Background of the Invention

In digital computer systems having memory system data transfers, it is highly desirable to monitor address transfers to ensure the proper transfer of addresses and address parity data, and to detect address data errors after transferring addresses from the address source to the address destinations.

The conventional method of detecting failed address transfers between memory systems includes the step of transmitting a level sensitive error signal to the address source from the address destination. However, such level sensitive error signal detection systems only indicate a failed address transfer without the ability to distinguish an address signal error as the source of the failed address transfer.

The simple level sensitive error signal system does not include monitoring the address signals themselves because these signals generally include a base clock synchronized multiple phase format. Error detection of such multiple phase format address control signals would required complex and expensive synchronization of error detection circuitry with the address control signals, since they are phase sensitive. Consequently, a simple address transfer error detection process which includes indication of address control signal error is highly desirable.

## Summary of the Invention

The present invention identifies, by means of an address parity toggle state signal, address transfer failure due to address signal error between a memory unit address controller and at least one memory unit address receiver. The address receiver generates parity bits in response to an address received from the address controller, and compares the generated parity bits with parity bits transmitted with the address control signal from the address controller. If the receiver generated parity bits and the received parity bits are identical, an address parity toggle signal sent back to the address controller is allowed to change states. However, if a difference between the generated and received parity bits is detected in the receiver, the receiver does not change the state of the address parity toggle signal, thereby indicating to the address controller that address transfer failure has occurred due to an address control signal error.

## Description of the Drawings

Figure 1 is a block diagram of a preferred embodiment of the address error detection system according to the present invention.

Figure 2 is a flow chart for the methodology of the present invention for the preferred embodiment shown in Figure 1.

## Description of the Preferred Embodiment

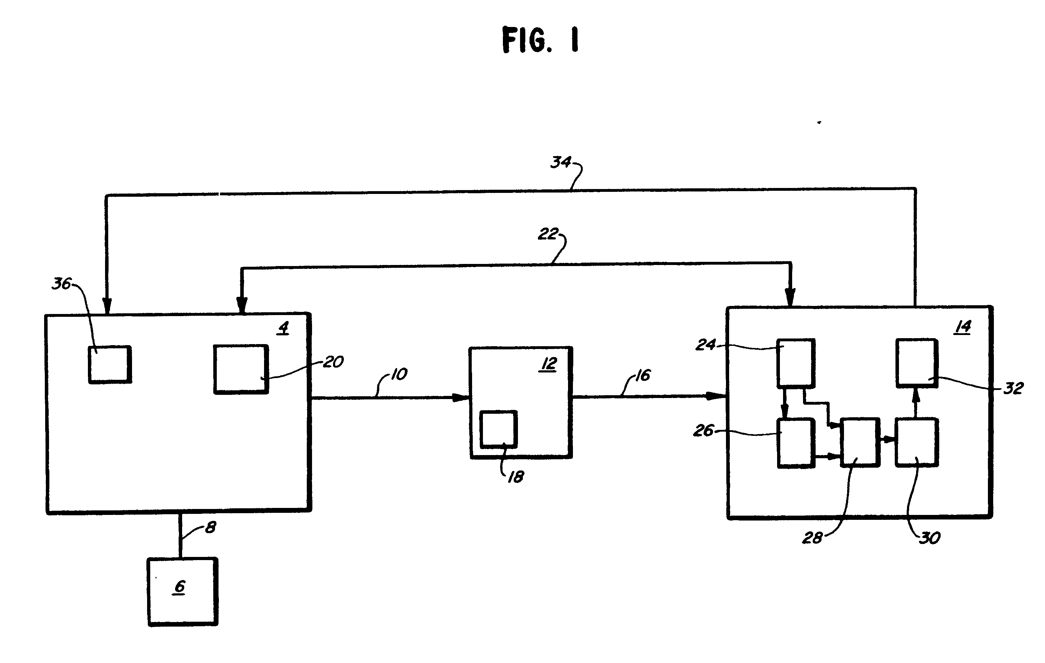

Referring to the drawings, wherein like reference characters designate like or corresponding parts throughout the views, Figure 1 shows a block diagram for a preferred embodiment of the present invention. A digital computer memory address control system 2 includes at least one memory address controller 4, which receives memory command information from an associated system control unit (SCU) 6 on a memory input command line 8. The address controller 4 sends corresponding multiple phase command signals via an address command line 10 to an associated memory system address generator 12 to generate memory addresses corresponding to the command information received by the address controller 4 from the SCU 6 on the line 8. The addresses generated by the address generator 12 are fed to at least one memory address receiver 14 via an address output line 16. The address generator 12 includes a parity bit generator 18 which generates parity bits for each address and transmits them to the address receiver 14 with the corresponding address on the line 16 in a manner well known in the art. The controller 4 also includes an address strobe generator 20 which loads each address with associated parity bits in a manner also well known in the art. The address strobe output signal is fed to the associated memory address receiver 14 via an address strobe signal bus line 22. The address generator 12, the parity bit generator 18 and the address strobe generator 20 described above are all well known elements which may be interconnected in a variety of well known configurations, and are shown in block form in Figure 1 for purposes of representation only, since they in themselves do not constitute part of the present invention.

The address receiver 14 includes an address detector 24, which detects the address and parity bits received on the line 16. The receiver 14 also includes its own parity bit generator 26, which generates parity bits for each address detected by the address detector 24. The receiver 14 additionally includes a parity bit comparator 28, for comparing the parity bits generated by the parity bit generator 26 with the corresponding parity bits detected by the address detector 24. The receiver 14 also includes a parity bit error detector 30, which produces a parity bit error signal indicating when the receiver generated parity bits do not match the corresponding receiver detected parity bits for an associated receiver detected address. The parity bit error detector 30 controls a parity bit toggle unit 32 in the receiver 14 with a parity bit toggle output signal on a line 34. Whenever a parity bit comparison is completed by the parity bit comparator 28 and the parity bit error detector 30 does not detect a parity bit error from such comparison, the parity bit toggle unit 32 switches its output state in response to indicate that a successful address transfer has been made. However, if the parity bit error detector 30 detects an error in the comparison of the receiver generated parity bit and the receiver detected parity bits, the error detector 30 prevents the parity bit toggle unit from switching its output state.

The parity bit toggle output signal on the line 34 is fed from the address receiver 14 to the address controller 4 to allow the address controller 4 to monitor the address transfer process to the receiver 14. The controller 4 includes a parity bit toggle state detector 36, which detects whether or not the parity bit toggle output signal on the line 34 changes states as each subsequent address signal is transmitted to the receiver 14 on the line 16. The toggle state detector 36 detects failure of the toggle signal on the line 34 to change states after the address signal is sent to the receiver 14 on the line 16 as an indication that the previous address transfer was unsuccessful due to address control signal error. If the toggle state detector 36 detects a change in toggle signal states on the line 34 after an address signal is sent to the receiver on the line 16, the toggle state detector 36 determines that the previous address transfer was successful.

The address detector 24, the parity bit generator 26, the parity bit comparator 28, the parity bit error detector 30, the parity bit toggle unit 32 and the parity bit toggle state detector 36 are all well known elements which may be interconnected in a variety of well known configurations, and are shown in block form in Figure 1 for purposes of representation only, since they in themselves do not constitute part of the present invention.

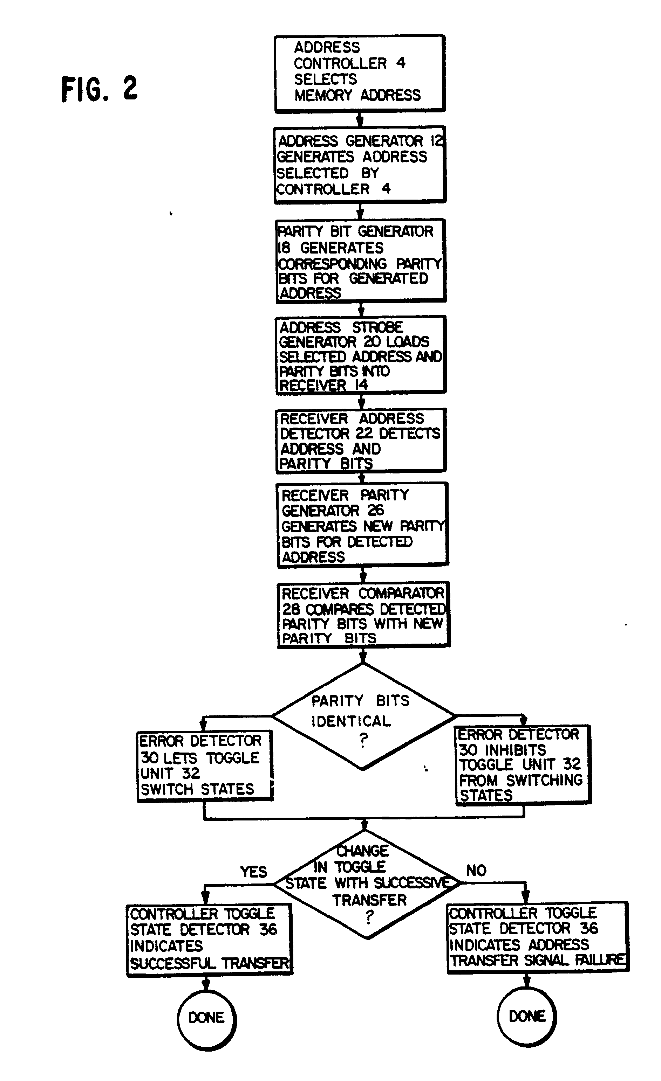

The methodology of the present invention as described above in connection with Figure 1 is shown by the flow chart in Figure 2. The address controller 4 commands the address generator 12 to generate a selected memory address corresponding to SCU command information from the SCU 6. The address generator 12 generates an address corresponding to the selected memory address. The parity bit generator 18 generates corresponding parity bits for each generated memory address. The controller address strobe generator 20 loads each generated address with corresponding parity bits into the associated address receiver 14. The receiver address detector 24 detects the address and parity bits in each loaded address. The receiver parity bit generator 26 generates parity bits corresponding to each detected address. The receiver parity bit comparitor 28 compares the receiver generated parity bits with the receiver detected parity bits. The receiver parity bit error detector 30 detects if there is a difference between the generated and detected parity bits to distinguish address transfer error. The receiver parity bit error detector 30 allows the receiver parity bit toggle unit 32 to switch its states if no parity bit difference is detected. The controller parity bit toggle state detector 36 responds to the switched states of the receiver parity bit toggle unit 32 between successive address transfers by indicating successful transfer. However, the controller parity bit toggle state detector 36 responds to the unswitched state of the receiver parity bit toggle unit 32 between successive address transfers by indicating that the previous address transfer was unsuccessful due to address control signal error.

Thus, there has been described herein an address transfer detection system for monitoring address transfers between a memory system address controller and at least one memory system address receivers The system is compatible with multiple phase address strobe signal bus communication systems between address controller and address receivers, and also monitors the failure of address transfer due to address control signal error. It will be understood that various changes in the details, arrangements and configuration of the parts and assemblies which have been described above in order to explain the nature of the present invention may be made by those skilled in the art within the principle and scope of the present invention as expressed in the appended claims.

# Claims

1. For a digital computer having a memory address controller and at least one memory address receiver, a method of monitoring the transfer of selected memory addresses from said memory address controller to at least one of said memory address receivers, comprising the steps of:
generating a memory address signal corresponding to one of said selected memory addresses;
generating first parity bits for said generated address signal corresponding to a selected parity bit code;
combining said address signal with said generated first parity bits;
transmitting said combined address signal and parity bits to at least one of said memory address receivers;
detecting said transmitted address signal and first parity bits;
generating second parity bits for said detected address signal corresponding to said selected parity bit code;
comparing said detected first parity bits with said generated second parity bits;
indicating no difference in said comparison of said detected first parity bits with said generated second parity bits;
generating a signal with a first state and second state;
shifting said signal from one of said first or second states to the other when said indication reflects no difference between said detected first or said generated second parity bits; and,
detecting said signal shift between successive address transfers between said memory address controller and said memory address receiver to indicate no address transfer signal failure due to address signal error.

2. For a digital computer having a memory address controller and at least one memory address receiver, a method of monitoring the transfer of selected memory addresses from said memory address controller to at least one of said memory address receivers, comprising the steps of:
generating a memory address signal corresponding to one of said selected memory addresses;
generating first parity bits for said generated address signal corresponding to a selected parity bit code;
combining said address signal with said generated first parity bits;
transmitting said combined address signal and parity bits to at least one of said memory address receivers;
detecting said transmitted address signal and first parity bits;
generating second parity bits for said detected address signal corresponding to said selected parity bit code;
comparing said detected first parity bits with said generated second parity bits;
indicating a difference in said comparison of said detected first parity bits with said generated second parity bits;
generating a signal with a first state and second state;
inhibiting the shift of said signal from one of said first or second states to the other when said indication reflects a difference between said detected first parity bits and said generated second parity bits; and,
detecting said inhibition of said signal shift between successive address transfers between said memory address controller and said memory address receiver to indicate address transfer signal failure due to address signal error.

3. For a digital computer having a memory address controller and at least one memory address receiver, a method of monitoring the transfer of selected memory addresses from said memory address controller to at least one of said memory address receivers, comprising the steps of:
generating a memory address signal corresponding to one of said selected memory addresses;
generating first parity bits for said generated address signal corresponding to a selected parity bit code;
combining said address signal with said generated first parity bits;
transmitting said combined address signal and parity bits to at least one of said memory address receivers;
detecting said transmitted address signal and first parity bits;
generating second parity bits for said detected address signal corresponding to said selected parity bit code;
comparing said detected first parity bits with said generated second parity bits;
indicating the result of said comparison of said detected first parity bits with said generated second parity bits;
generating a signal with a first state and second state;
shifting said signal from one of said first or second states to the other when said indication reflects no difference between said detected first parity bits and said generated second parity bits;
inhibiting the shift of said signal from one of said first or second states to the other when said indication reflects a difference between said detected first parity bits and said generated second parity bits; and,
detecting said signal shift or said inhibition of said signal shift between successive address transfers between said memory address controller and said memory address receiver to indicate respectively no address transfer signal failure due to address signal error or address signal transfer failure due to address signal error.

4. A method of monitoring the transfer of selected memory addresses between a memory address controller and at least one memory address receiver, comprising the steps of:

transmitting a combined memory address signal corresponding to one of said selected memory addresses and first parity bits corresponding to a selected parity bit code;

detecting said transmitted address signal and first parity bits;

generating second parity bits for said detected address signal corresponding to said selected parity bit code;

indicating whether said detected first parity bits are the same or different than said generated second parity bits;

generating a signal with a first state and a second state;

controlling the state of said signal to correspond to the indication of whether said detected first parity bits are the same or different than said generated second parity bits; and,

detecting the state of said signal between successive address transfers between said memory address controller and said memory address receiver to indicate whether or not address transfer signal failure due to address signal error has occurred.

5. For a memory including a memory address receiver for receiving address signals, a method for indicating address transfer failure due to address signal error, comprising:

detecting an address signal, and first parity bits corresponding to said address signal according to a selected parity bit code;

generating second parity bits for said detected address signal corresponding to said selected parity bit code;

comparing said detected first parity bits with said generated second parity bits;

indicating the results of said comparison of said detected first parity bits with said generated second parity bits;

generating a signal with a first and a second state; and,

shifting said signal from one of said first or second states to the other when said indication reflects no difference between said detected first parity bits and said generated second parity bits.

6. For a memory including a memory address receiver for receiving address signals, a method for indicating address transfer failure due to address signal error, comprising:

detecting an address signal, and first parity bits corresponding to said address signal according to a selected parity bit code;

generating second parity bits for said detected address signal corresponding to said selected parity bit code;

comparing said detected first parity bits with said generated second parity bits;

indicating the results of said comparison of said detected first parity bits with said generated second parity bits;

generating a signal with a first and a second state; and,

inhibiting the shift of said signal from one of said first or second states to the other when said indication reflects a difference between said detected first parity bits and said generated second parity bits.

7. For a memory including a memory address receiver for receiving address signals, a method for indicating address transfer failure due to address signal error, comprising:

detecting an address signal, and first parity bits corresponding to said address signal according to a selected parity bit code;

generating second parity bits for said detected address signal corresponding to said parity bit correction code;

comparing said detected first parity bits with said generated second parity bits;

indicating the results of said comparison of said detected first parity bits with said generated second parity bits;

generating a signal with a first and a second state;

shifting said signal from one of said first or second states to the other when said indication reflects no difference between said detected first parity bits and said generated second parity bits; and,

inhibiting the shift of said signal from one of said first or second states to the other when said indication reflects a difference between said detected first parity bits and said generated second parity bits.

8. For a memory including a memory address receiver for receiving address signals, a method for indicating address transfer failure due to address signal error, comprising:

transmitting a combined memory address signal and first parity bits corresponding to a selected parity bit code;

detecting said transmitted address signal and first parity bits;

generating second parity bits for said detected address signal corresponding to said parity bit code;

indicating whether said detected first parity bits are the same or different than said generated second parity bits;

generating a signal with a first state and a second state; and,
controlling the state of said signal to correspond to the indication of whether said detected first parity bits are the same or different than said generated second parity bits.

9. Apparatus useful in a digital computer having a memory address controller and at least one memory address receiver, for monitoring the transfer of selected memory addresses from said memory address controller to at least one of said memory address receivers, comprising:
means for generating a memory address signal corresponding to one of said selected memory addresses;
means for generating first parity bits for said generated address signal corresponding to a selected parity bit code;
means for combining said address signal with said first parity bits;
means for transmitting said combined address signal and parity bits to at least one of said memory address receivers;
means for detecting said transmitted address signal and first parity bits;
means for generating second parity bits for said detected address signal corresponding to said selected parity bit code;
means for comparing said detected first parity bits with said generated second parity bits;
means for indicating no difference in said comparison of said detected first parity bits with said generated second parity bits;
means for generating a signal with a first state and a second state;
means for shifting said signal from one of said first or second states to the other in response to means for indicating no difference between said detected first parity bits and said generated second parity bits; and,
means for detecting said signal shift between successive address transfers between said memory address controller and said memory address receiver to indicate no address transfer signal failure due to address signal error.

10. Apparatus useful in a digital computer having a memory address controller and at least one memory address receiver tor monitoring the transfer of selected memory addresses from said memory address controller to at least one of said memory address receivers, comprising:
means for generating a memory address signal corresponding to one of said selected memory addresses;
means for generating first parity bits for said generated address signal corresponding to a selected parity bit code;
means for combining said address signal with said generated first parity bits;

means for transmitting said combined address signal and parity bits to said address receiver;
means for detecting said transmitted address signal and first parity bits;
means for generating second parity bits for said detected address signal corresponding to said selected parity bit code;
means for comparing said detected first parity bits with said generated second parity bits;
means for indicating a difference in said comparison of said detected first parity bits with said generated second parity bits;
means for generating a signal with a first state and second state;
means for inhibiting the shift of said signal from one of said first or second states to the other in response to said means for indicating a difference between said detected first parity and said generated second parity bits; and,
means for detecting said inhibition of said signal shift between successive address transfers between said memory address controller and said memory address receiver to indicate address transfer signal failure due to address signal error.

11. Apparatus useful in a digital computer having a memory address controller and at least one memory address receiver for monitoring the transfer of selected memory addresses from said memory address controller to at least one of said memory address receivers, comprising:
means for generating a memory address signal corresponding to one of said selected memory address;
means for generating first parity bits for said generated address signal corresponding to a selected parity bit code;
means for combining said address signal with said generated first parity bits;
means for transmitting said address signal with said parity bits to said address receiver;
means for detecting said transmitted address signal and corresponding first parity bits;
means for generating second parity bits for said detected address signal corresponding to said selected parity bit code;
means for comparing said detected first parity bits with said generated second parity bits;
means for indicating the result of said comparison of detected said first parity bits with said generated second parity bits;
means for generating a signal with a first state and second state;
means for shifting said signal from one of said first or second states to the other in response to said means for indicating no difference between said detected first parity bits and said generated second parity bits;
means for inhibiting the shift of said signal from one of said first or second states to the other in response to said means for indicating a difference between said detected first parity bits and said generated second parity bits; and,

means for detecting said signal shift or said inhibition of said signal shift between successive address transfers between said memory address controller and said memory address receiver to indicate no address transfer signal failure due to address signal error or address signal transfer failure due to address signal error.

12. Apparatus for monitoring the transfer of selected memory addresses between a memory address controller and at least one memory address receiver, comprising:

means for transmitting a combined memory address signal corresponding to one of said selected memory addresses and first parity bits corresponding to a selected parity bit code;

means for detecting said transmitted address signal and said first parity bits;

means for generating second parity bits for said detected address signal corresponding to said selected parity bit code;

means for indicating whether said detected first parity bits are the same or different than said generated second parity bits;

means for generating a signal with a first state and a second state;

means for controlling the state of said signal in response to said means for indicating whether said detected first parity bits are the same or different than said generated second parity bits; and

means for detecting the state of said signal between successive address transfers between said memory address controller and said memory address receiver to indicate whether or not address transfer signal failure due to address signal error has occurred.

13. A memory device including a memory address receiver for receiving address signals and indicating address transfer failure due to address signal error, comprising:

means for detecting an address signal, and first parity bits corresponding to said address signal according to a selected parity bit code;

means responsive to said detected address signal for generating second parity bits corresponding to said selected parity bit code;

means for comparing said detected first parity bits with said generated second parity bits;

means for indicating the result of said comparison of said detected first parity bits with said generated second parity bits;

means for generating a signal with a first state and a second state; and,

means responsive to said indicating means for shifting said signal from one of said first or second states to the other when the result of said indicating means reflects no difference between said detected first parity bits and said generated second parity bits.

14. A memory device including a memory address receiver for receiving address signals and for indicating address transfer failure due to address signal error, comprising:

means for detecting an address signal, and first parity bits corresponding to said address according to a selected parity bit code;

means responsive to said detected address signal for generating second parity bits corresponding to said selected parity bit code;

means for comparing said detected first parity bits with said generated parity bits;

means for indicating the result of said comparison of said detected first parity bits with said generated second parity bits;

means for generating a signal with a first state and a second state: and,

means responsive to said indicating means for inhibiting the shift of said signal from one of said first or second states to the other when said indicating means reflects a difference between said detected first parity bits and said generated second parity bits.

15. A memory device including a memory address receiver for receiving address signals and for indicating address transfer failure to due address signal error, comprising:

means for detecting an address signal, and first parity bits corresponding to said address signal according to a selected parity bit code;

means for generating second parity bits for said detected address signal corresponding to said selected parity bit code;

means for comparing said detected first parity bits with said generated second parity bits;

means for indicating the results of said comparison of said detected first parity bits with said generated second parity bits;

means for generating a signal with a first state and a second state;

means for shifting said signal from one of said first or second states to the other when said indication means reflects no difference between said detected first parity bits and said generating second parity bits; and,

means for inhibiting the shift of said signal from one of said first or second states to the other when said indication means indicates a difference between said detected first parity bits and said generated second parity bits.

16. A memory device including a memory address receiver for receiving address signals and for indicating address transfer failure due to address signal error, comprising:

means for transmitting a combined memory address signal and first parity bits corresponding to a selected parity bit code;

means for detecting said transmitted address signal and first parity bits;

means for generating second parity bits for said detected address signal corresponding to said parity bit code;

means for indicating whether said detected first parity bits are the same or different than said generated second parity bits;

means for generating a signal with a first and a second state; and,

means for controlling the state of said signal to correspond to the indication of whether said detected first parity bits are the same or different than said generated second parity bits.

**FIG. I**

EP 0 379 770 A2

**FIG. 2**

```
┌─────────────────────┐
│ ADDRESS             │
│ CONTROLLER 4        │
│ SELECTS             │
│ MEMORY ADDRESS      │
└─────────────────────┘
           │
           ▼
┌─────────────────────┐
│ ADDRESS GENERATOR 12│
│ GENERATES ADDRESS   │
│ SELECTED BY         │
│ CONTROLLER 4        │
└─────────────────────┘
           │
           ▼
┌─────────────────────┐
│ PARITY BIT GENERATOR│
│ 18 GENERATES        │
│ CORRESPONDING PARITY│
│ BITS FOR GENERATED  │
│ ADDRESS             │
└─────────────────────┘
           │
           ▼
┌─────────────────────┐
│ ADDRESS STROBE      │
│ GENERATOR 20 LOADS  │
│ SELECTED ADDRESS AND│
│ PARITY BITS INTO    │
│ RECEIVER 14         │
└─────────────────────┘
           │
           ▼
┌─────────────────────┐
│ RECEIVER ADDRESS    │
│ DETECTOR 22 DETECTS │
│ ADDRESS AND         │
│ PARITY BITS         │
└─────────────────────┘
           │
           ▼
┌─────────────────────┐
│ RECEIVER PARITY     │
│ GENERATOR 26        │
│ GENERATES NEW PARITY│
│ BITS FOR DETECTED   │
│ ADDRESS             │
└─────────────────────┘
           │
           ▼
┌─────────────────────┐
│ RECEIVER COMPARATOR │
│ 28 COMPARES DETECTED│
│ PARITY BITS WITH NEW│
│ PARITY BITS         │
└─────────────────────┘
           │
           ▼
      ╱ PARITY BITS ╲
     ╱  IDENTICAL    ╲
     ╲      ?        ╱
      ╲             ╱
```

┌─────────────────────┐                    ┌─────────────────────┐
│ ERROR DETECTOR      │                    │ ERROR DETECTOR      │
│ 30 LETS TOGGLE      │                    │ 30 INHIBITS         │
│ UNIT 32             │                    │ TOGGLE UNIT 32      │
│ SWITCH STATES       │                    │ FROM SWITCHING      │
│                     │                    │ STATES              │
└─────────────────────┘                    └─────────────────────┘

```
      ╱   CHANGE    ╲
  YES╱  IN TOGGLE   ╲NO
    ╱ STATE WITH SUCCESSIVE╲
    ╲   TRANSFER   ╱
     ╲     ?      ╱
```

┌─────────────────────┐                    ┌─────────────────────┐
│ CONTROLLER TOGGLE   │                    │ CONTROLLER TOGGLE   │
│ STATE DETECTOR 36   │                    │ STATE DETECTOR 36   │
│ INDICATES           │                    │ INDICATES ADDRESS   │
│ SUCCESSFUL TRANSFER │                    │ TRANSFER SIGNAL FAILURE│
└─────────────────────┘                    └─────────────────────┘
           │                                          │
           ▼                                          ▼
        ( DONE )                                   ( DONE )